(19) **Europäisches Patentamt**

**European Patent Office**

**Office européen des brevets**

(11) Veröffentlichungsnummer: **0 263 399 B1**

## (12) EUROPÄISCHE PATENTSCHRIFT

(45) Veröffentlichungstag der Patentschrift: **13.05.92**

(21) Anmeldenummer: **87114160.2**

(22) Anmeldetag: **29.09.87**

Die Akte enthält technische Angaben, die nach dem Eingang der Anmeldung eingereicht wurden und die nicht in dieser Patentschrift enthalten sind.

(51) Int. Cl.⁵: **B01D 53/36**, B01J 29/12

(54) **Verfahren zur katalytischen Reduktion von Stickoxiden.**

(30) Priorität: **08.10.86 DE 3634243**

(43) Veröffentlichungstag der Anmeldung:
**13.04.88 Patentblatt 88/15**

(45) Bekanntmachung des Hinweises auf die Patenterteilung:
**13.05.92 Patentblatt 92/20**

(84) Benannte Vertragsstaaten:
**AT BE CH DE ES FR GB GR IT LI NL SE**

(56) Entgegenhaltungen:
**EP-A- 0 081 774**
**EP-A- 0 169 939**
**FR-A- 2 500 326**
**GB-A- 1 417 546**
**US-A- 4 104 361**

(73) Patentinhaber: **Kali-Chemie Aktiengesell-schaft**
**Postfach 220, Hans-Böckler-Allee 20**
**W-3000 Hannover 1(DE)**

(72) Erfinder: **Schwetje, Norbert**
**Sögelerstrasse 76**
**W-3000 Hannover 72(DE)**
Erfinder: **Kipping, Dieter E.**
**Osterkamp 24**
**W-3006 Burgwedel(DE)**

(74) Vertreter: **Lauer, Dieter, Dr.**
**c/o Kali-Chemie AG Postfach 220 Hans-Böckler-Allee 20**
**W-3000 Hannover 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 263 399 B1

**Beschreibung**

Die Erfindung betrifft ein Verfahren zur katalytischen Reduktion von Stickoxiden sowie einen für ein solches Verfahren besonders geeigneten Katalysator.

Zur selektiven katalytischen Reduktion von Stickoxiden ($NO_x$) in Abgasen wurde bereits vorgeschlagen, Zeolithe als Katalysatoren einzusetzen. Die bisher vorgeschlagenen Lösungen arbeiten aber bei relativ hohen Temperaturen. So werden beim Einsatz von Zeolith A oder X in der Natrium- oder H-Form selbst bei stöchiometrischem Zusatz von Ammoniak als Reduktionsmittel bei 320 °C nur etwa 70 % der Stickoxide umgesetzt.

Ferner wird in der britischen Patentsschrift GB 1 417 546 ein verfahren zur $NO_x$-Reduktion unter Verwendung von Zeolith-Katalysatoren beschrieben. Die dort verwendeten Zeolith-Katalysatoren umfassen z.B. 10 Gew.-% eines zu 100 Gew.-% SE-ausgetauschten Molekularsiebzeolithen, welcher in einem widerstandsfähigen Oxid eingebettet ist, sowie eine spezielle katalytische Edelmetallkomponente, bestehend aus den Edelmetallen Platin und Rhodium. Solche Katalysatoren ermöglichen zwar bereits eine brauchbare $NO_x$-Reduktion, jedoch bedürfen sie hierzu einer speziellen Zusammensetzung aus teuren Edelmetallen als katalytische Komponente.

Aufgabe der Erfindung ist es, die bestehenden, gattungsgemäßen Verfahren zu verbessern und insbesondere ein Verfahren zur Verfügung zu stellen, daß das Arbeiten bei tieferer Temperatur und ohne die Verwendung von katalytischen Edelmetallkomponenten gestattet.

Eine weitere Aufgabe der Erfindung besteht darin, einen neuen Katalysator zur Verfügung zu stellen, der für das erfindungsgemäße Verfahren besonders geeignet ist.

Diese Aufgaben werden durch das in den Patentansprüchen beschriebene Verfahren sowie die dort angegebene Katalysator-Zusammensetzung gelöst.

Das erfindungsgemäße Verfahren geht aus von einem gattungsgemäßen Verfahren zur katalytischen Reduktion von Stickoxiden ($NO_x$) in Abgasen, insbesondere Rauchgasen, durch Behandlung der Abgase mit einem Katalysator auf Zeolith-Basis unter Zusatz eines Wasserstoff-Donators, und ist dadurch gekennzeichnet, daß man einen Katalysator einsetzt einsetzt aus einem in einer amorphen Matrix aus Oxid dispergierten Zeolith Y. in dem 40 bis 90 Mol-% der austauschbaren Ionen durch Lithium- und/oder Seltenerdmetall-Ionen (SE-Ionen) ersetzt sind, und daß der Katalysator zusätzlich eine Phase mit Wasserstoffbindungsvermögen aus einem oder mehreren Metallen aus der Gruppe der Metalle mit den Ordnungszahlen 22 bis 28. vorzugsweise 26 bis 28. oder Verbindungen dieser Metalle enthält.

Unter SE-Ionen werden Ionen der Elemente mit der Ordnungszahl 57 bis 71 verstanden. Bevorzugte SE-Ionen sind Ionen der Elemente Cer, Lanthan, Praseodym, Neodym, Samarium.

Die Herstellung solcher ausgetauschten Zeolithe ist an sich bekannt. Sie kann einerseits hydrothermal durch Kristallisation von Zeolith Y in Gegenwart von SE- und/oder Lithium-Ionen erfolgen. Bevorzugt wird aber die Herstellung durch Kationenaustausch durch Behandlung von kristallinem Zeolith Y mit einer Lösung eines Salzes von Lithium, SE und/oder deren Gemischen. Eine solche Arbeitsweise ist in allgemeiner Art in DE-AS 1 299 603 - die die Herstellung von Katalysatoren beschreibt, die für die Umwandlung von Kohlenwasserstoffen geeignet sind - insbesondere in Spalte 3, Zeile 15 bis Spalte 4, Zeile 26 sowie Beispiel 1 beschrieben und kann analog für die Herstellung von ausgetauschtem Zeolith Y herangezogen werden.

Gemäß der Erfindung wird der ausgetauschte, kristalline Zeolith Y in einer amorphen Matrix aus Oxid, die aus einem Oxidgel gebildet wurde, dispergiert eingesetzt. Der Begriff "dispergiert" steht dabei im Sinn von "feinverteilt". Gute Ergebnisse werden erhalten, wenn die Anteile an ausgetauschtem Zeolith Y mindestens 10 Gew.-% und an Oxidmatrix maximal 90 Gew.-%, bezogen auf Gemisch, betragen. Der Anteil an ausgetauschtem Zeolith Y kann dabei über den gesamten Bereich hin variieren bis hin zu 100 Gew.-%, bei gleichzeitig abnehmendem Anteil an Oxidmatrix bis hin zu 0 Gew.-%.

In einer bevorzugten Variante sieht die Erfindung vor, als Katalysator ein Gemisch aus 15 bis 40 Gew.-% Zeolith Y und 85 bis 60 Gew.-% Oxidmatrix einzusetzen

Zur Bildung der Oxidmatrix für den ausgetauschten Zeolith Y kommen Oxidgele oder Mischgele in Frage aus der Gruppe $SiO_2$ und/oder Oxiden von Metallen aus den Gruppen II, IIIB, IVA, VIA des periodischen Systems der Elemente.

Bevorzugt ist die Oxidmatrix ausgewählt aus der Gruppe $SiO_2$ und/oder den Oxiden der Metalle Aluminium, Magnesium, Calcium, Titan, Zirkonium oder deren binären oder ternären Gemische.

Besonders bevorzugt ist die aus Oxidgel gebildete Oxidmatrix eine binäre oder ternäre Matrix aus $SiO_2$ und einem der genannten Metalloxide. Die Zusammensetzung dieser binären oder ternären Oxidgele für die Oxidmatrix kann in weiten Bereichen variieren. So kann 75 bis zu 100 Gew.-% des Gelanteils aus $SiO_2$ und

entsprechend 25 bis 0 Gew.-% aus Metalloxid bestehen. Besonders gute Ergebnisse werden mit einer Gelzusammensetzung für eine Oxidmatrix erzielt, die aus 90 bis 100 Gew.-% $SiO_2$ und 0 bis 10 Gew.-% Metalloxid besteht.

An binären Oxidgelen für die Oxidmatrix sind insbesondere die Paarungen $SiO_2$-$Al_2O_3$, $SiO_2$-MgO, $SiO_2$-$ZrO_2$, $SiO_2$-$TiO_2$ zu nennen. An ternären Kombinationen sind insbesondere zu nennen $SiO_2$-$Al_2O_3$-MgO, $SiO_2$-$Al_2O_3$-$ZrO_2$, $SiO_2$-$Al_2O_3$-CaO, $SiO_2$-$Al_2O_3$-$TiO_2$, $SiO_2$-MgO-$ZrO_2$ , $SiO_2$-MgO-$TiO_2$.

Die Einbringung von Zeolith in eine Gelmatrix ist an sich bekannt. Sie erfolgt vorzugsweise durch Einfällung von Zeolith, erfindungsgemäß von Zeolith Y, in ein Oxidgel über den Sol-Gel-Prozeß. Eine solche Arbeitsweise ist beispielsweise in allgemeiner Art in der bereits angeführten DE-AS 1 299 603, insbesondere in Spalte 2, Zeile 29 bis Spalte 3, Zeile 14, Spalte 4, Zeile 27 bis Spalte 7, Zeile 3 und Beispiel 2 bis 9 beschrieben und kann entsprechend den vorgehend näher spezifierten erfindungsgemäßen Rahmenbedingungen leicht zur Herstellung von Katalysatorzusammensetzungen übertragen werden, die im erfindungsgemäßen Verfahren eingesetzt werden können.

Die in der als Beispiel angeführten DE-AS 12 99 603 als notwendig angesehene zusätzliche Einfällung inerter Feinanteile ist erfindungsgemäß nicht zwingend notwendig, zur Verbesserung physikalischer Eigenschaften des Katalysator wie z.B. Härte, Abrieb etc. können allerdings in an sich bekannter Weise der Zusammensetzung aus ausgetauschtem Zeolith Y und Oxidgel auch pulverförmige, inerte Feinanteile wie Alpha-$Al_2O_3$, zugesetzt werden. Dieser inerte Feinanteil ist so zu bemessen, daß sein Anteil an der Gesamtheit aus feinteiligem, ausgetauschtem Zeolith und inertem Feinanteil 50 Gern.-%, vorzugsweise 20 Gern.-% nicht überschreitet.

Die Erfindung sieht den Einsatz von Katalysatoren vor, die zusätzlich zu den bisher genannten Bestandteilen eine Phase enthalten, die Wasserstoffbindungsvermögen aufweist. Hinsichtlich dieser Maßnahme liegt ein wesentlicher Unterschied zu den aus DE-AS 1 299 603 bekannten Katalysatoren vor, die solche Bestandteile gerade nicht enthalten dürfen.

Als Phase mit Wasserstoffbindungsvermögen können eines oder mehrere der Metalle aus der Gruppe der übergangsmetalle mit den Ordnungszahlen 22 bis 28, vorzugsweise 26 bis 28, oder Verbindungen dieser Metalle verwendet werden. Insbesondere sind die Metalle Eisen, Kobalt, Nickel oder Gemische der genannten Metalle sowie deren Verbindungen sehr gut geeignet.

Als Phase mit Wasserstoffbindungsvermögen werden einerseits Verbindungen der genannten Metalle, einzeln oder im Gemisch, verwendet. Solche Verbindungen können beispielsweise als lösliche Salze oder als Feststoffpulver während der Herstellung der Katalysatoren eingebracht werden. Bevorzugt werden als Verbindungen Chalkogenide eingesetzt wie z.B. Sulfide. Insbesondere werden Sauerstoffverbindungen als Chalkogenide eingesetzt wie z.B. Oxide (Eisenoxide etc) oder Mischoxide wie beispielsweise Titanate von übergangsmetallen, z.B. Eisentitanat.

In einer besonderen Variante ist die Phase mit Wasserstoffbindungsvermögen eine metallische Phase, also ein Metall oder ein Gemisch von Metallen. Der Begriff Gemisch umfaßt dabei sowohl Gemische von Metallpulvern oder deren Präcursoren als auch Legierungen von Metallen.

Der Anteil der Phase mit Wasserstoffbindungsvermögen am Gesamtkatalysator kann in breiten Bereichen variiert werden. So kann ihre Konzentration im Bereich von 0,05 bis 15 Gew.-% liegen; sehr gute Ergebnisse wurden im Bereich von 0,1 bis 5 Gew.-% erzielt.

Die Phase mit Wasserstoffbindungsvermögen kann auf verschiedene Arten in den Katalysator eingebracht werden. Einerseits ist es möglich, entsprechendes Metallpulver in den für die Gelbildung zu verwendenden Ansatz einzubringen. Andererseits ist es möglich, den festen Katalysator mit metallischer Phase zu belegen, wie z.B. durch Beschichten, Bedampfen, etc.

Eine weitere Variante besteht darin, die Phase mit Wassersoffbindungsvermögen in Form einer Metallverbindung einzubringen - sei es durch Einarbeiten in den Gelansatz, sei es durch nachträgliche Behandlung des festen Katalysators - und sofern man die metallische Phase erhalten möchte, diese durch Reduktion aus der Metallverbindung zu bilden, z.B. durch Erhitzen im Inertgasstrom oder durch Behandlung mit flüssigem Reduktionsmittel oder mit gasförmigem Reduktionsmittel wie Wasserstoff, Ammoniak etc.

Das erfindungsgemäße Verfahren entfernt Sickoxide ($NO_x$ ) reduktiv unter Zusatz eines Wasserstoff-Donators. Als solcher kann beispielsweise ein Kohlenwasserstoff, wie Methan, oder ein Gemisch von Kohlenwasserstoffen, wie Erdgas, oder Wasserstoff eingesetzt werden. Dieser Einsatz kommt bevorzugt dann in Frage, wenn das Abgas kein oder nur geringe Mengen an Sauerstoff enthält. Als weiterer Wasserstoff-Donator eignet sich insbesondere Ammoniak, auch für Abgase wie Rauchgase, die nennenswerte Anteile an Sauerstoff aufweisen.

Der Wasserstoff-Donator wird in an sich bekannten Konzentrationen eingesetzt, die, bezogen auf im Abgas enthaltendes $NO_x$ , 20 bis 120 Mol-%, vorzugsweise 50 bis 100 Mol-% der stöchiometrisch notwendigen Menge ausmachen.

Die NO$_x$-Reduktion kann erfindungsgemäß bei niedrigen Temperaturen erfolgen. So werden gute Entstickungsresultate schon ab 150 °C (Abgastemperatur) erzielt. Nach oben hin sind prinzipiell keine Grenzen gesetzt; es reicht im Normalfall aber aus bei Temperaturen bis zu 350 °C, insbesondere bis zu 280 °C zu arbeiten.

Gemäß einer Aufgabenstellung der Erfindung wird auch ein neuer Katalysator zur Verfügung gestellt. Dieser zeichnet sich durch folgende Zusammensetzung aus

a) 10 bis 95 Gew.-% eines zu 40 bis 90 mol-% mit Lithium- und/oder SE-Ionen ausgetauschtem Zeolith Y

b) 4,95 bis 89,95 Gew.-% amorpher Oxidgelmatrix aus der Gruppe SiO$_2$ und/oder der Oxide der Metalle Aluminium, Magnesium, Calcium, Titan, Zirkonium, oder deren binären oder ternären Gemischen

c) 0,05 bis 15 Gew.-% einer Phase mit Wasserstoffbindungsvermögen aus der Gruppe der Metalle mit den Ordnungszahlen 22 bis 28, vorzugsweise 26 bis 28, oder Verbindungen dieser Metalle,

wobei die Summe der Komponenten a) bis c) sich jeweils auf 100 Gew.-% ergänzt.

Der für das erfindungsgemäße Verfahren einzusetzende Katalysator kann in allen an sich bekannten Formen zum Einsatz kommen, z.B. als Beschichtung auf einem inerten Trägermaterial. Bevorzugt ist aber der Einsatz ohne Träger als Formkörper. Bekannte Formkörper sind beispielsweise Tabletten, Kugeln, Mikrokugeln, Wabenkörper etc.

Der erfindungsgemäße Katalysator und das erfindungsgemäße Verfahren zeichnen sich durch folgende vorteilhafte Eigenschaften aus

- hoher erzielbarer Entstickungsgrad
- Arbeiten bei tiefen Temperaturen
- lange Lebensdauer
- Unempfindlichkeit gegen Katalyatorgifte wie Schwefelverbindungen, Staub etc.
- Unempfindlichkeit gegen Abrieb und Belegung durch inerte Materialien
- hohe Säurefestigkeit.

Die Erfindung ist anwendbar für einen breiten Bereich von Abgasen wie beispielsweise Abgasen aus Kraftwerken, wie beispielsweise Blockheizkraftwerken oder aber auch Abgasen aus chemischen Betrieben. Sie findet bevorzugt Anwendung zur Entstickung von Rauchgasen.

Die nachfolgenden Beispiele sollen die Erfindung näher erläutern ohne ihren Umfang zu begrenzen.

Beispiele

A) Herstellung der Katalysatoren

Die in den folgenden Beispielen verwendeten Katalysatoren wurden nach folgender Arbeitsweise hergestellt.

A1) Kationenaustausch

Zeolith Y in der Na-Form wurde mit einer 25 Gew.-%igen wässrigen Lösung von SE-Chlorid bzw. Lithiumchlorid bei Raumtemperatur kontaktiert und anschließend filtriert und getrocknet und gegebenenfalls calciniert. Durch Variation der Parameter Kontaktzeit, Temperatur und Druck wurden dabei unterschiedliche Mengen an SE- bzw. Lithium-Ionen in den Zeolith eingebaut.

Der sich ergebene Seltene Erden ausgetauschte Zeolith wurde frei von löslichen Salzen gewaschen. Das calzinierte Pulver wurde in an sich bekannter Weise zu Strangpreßlingen, Kugelformkörpern oder Wabenformkörpern für den Einsatz als Katalysator konfektioniert.

A2) Herstellung eines Katalysators mit ausgetauschtem Zeolith Y in Oxid -Matrix

Beispiel A2.1.

Eine
I) wässrige, saure Lösung, die
a) Aluminiumsulfat und Schwefelsäure bzw.
b) Aluminiumsulfat, Schwefelsäure und Metallsulfat (Eisen-,Mangan- oder Chromsulfat) enthält und
II) eine Wasserglaslösung (Dichte 1,3 g/ml, 7,3 Gew.-% Na$_2$O), die mit einer 25 Gew.-%igen wässerigen Suspension von Seltenen Erden ausgetauschten Zeolith Y im Volumenverhältnis von 10:8 versetzt war, wurden durch eine Mischdüse kontinuierlich miteinander in einem Gewichtsverhältnis von 1:10 vermischt, wobei die entsprechenden relativen Zuführungsgeschwindigkeiten der Lösungen bzw. Suspensionen angewendet wurden. Das sich ergebende ausgetauschten Zeolith Y enthaltende Alumosilikat-Sol wurde bei Raumtemperatur in einer Gelierungszeit von 2-8 Sekunden bei einem pH-Wert von 7,5 zu Gel-Körpern in an sich bekannter Weise geformt. Die erhaltenen Gel-Körper wurden gealtert, frei von löslichen Salzen gewaschen und anschließend getrocknet (180 °C) und getempert (320 °C).

Beispiel A2.2.

Ein Oxidmatrix-Körper hergestellt nach Beispiel A2.1a. wurde vor dem Tempern bei 320 °C mit einer 25 Gew.-%igen wässerigen Suspension von Eisentitanat ca. eine Stunde bei Raumtemperatur beaufschlagt und anschließend getrocknet und getempert.

Nach den Verfahren gemäß Versuch A1 bzw. A2 wurden folgende Katalysatoren erhalten.

| Katalysator | Art | Austauschgrad |
|---|---|---|
| A1.1 | SE-Zeolith Y | 40 Mol % |
| A1.2 | SE-Zeolith Y | 80 Mol % |
| A1.3 | Li-Zeolith Y | 40 Mol % |
| A1.4 | Li-Zeolith y | 80 Mol % |

| Katalysator | Art | Anteil Matrix |
|---|---|---|
| A2.1a | A1.1 + Alumosilikat-Gel | 60 Gew.-% |
| A2.2a | A1.2 + Alumosilikat-Gel | 50 Gew.-% |

| Katalysator | Art | Anteil Metall |
|---|---|---|
| A2.1b | A2.1a + Fe[1] | 1,0 Gew.-% |
| A2.1b | A2.1a + Mn[1] | 0,8 Gew.-% |
| A2.1b | A2.1a + Cr[1] | 0,3 Gew.-% |
| A2.2 | A2.1a + Fe[2] | 2,5 Gew.-% |

[1] eingesetzt als Sulfat, berechnet als Metall
[2] eingesetzt als Titanat, berechnet als Metall

B) NO$_x$-Entfernung

Über einen erfindungsmäßen Katalysator in Wabenkörperform wurde Abgas (Rauchgas), das 1000 ppm NO$_x$ (berechnet als NO) enthielt, mit einer Raumgeschwindigkeit von 10 000 h$^{-1}$ geleitet. Vor dem Katalysator wurde Ammoniak als Wasserstoff-Donator in stöchiometrischer Menge zugesetzt. Es wurden die in der nachfolgenden Tabelle angegebenen Ergebnisse erhalten.

| Katalysator | Temperatur [°C] | Umsatz [Mol %] |
|---|---|---|
| A2.1a | 230 | 67 |
| A2.2 | 242 | 74 |

**Patentansprüche**

1. Verfahren zur katalytischen Reduktion von Stickoxiden (NO$_x$) in Abgasen, insbesondere Rauchgasen, durch Behandlung der Abgase mit einem Katalysator auf Zeolith-Basis unter Zusatz eines Wasserstoff-Donators, dadurch gekennzeichnet, daß man einen Katalysator einsetzt aus einem in einer amorphen

5

Matrix aus Oxid dispergierten Zeolith Y, in dem 40 bis 90 Mol-% der austauschbaren Ionen durch Lithium- und/oder Seltenerdmetall-Ionen (SE-Ionen) ersetzt sind, und daß der Katalysator zusätzlich eine Phase mit Wasserstoffbindungsvermögen aus einem oder mehreren Metallen aus der Gruppe der Metalle mit den Ordnungszahlen 22 bis 28, vorzugsweise 26 bis 28, oder Verbindungen dieser Metalle enthält.

2. Verfahren gemäß Anspruch 1, dadurch gekennzeichnet, daß man einen Katalysator einsetzt, in dem ein Gemisch aus mindestens 10 Gew.-%, vorzugsweise 15 bis 40 Gew.-% Zeolith Y und maximal 90 Gew.-%, vorzugsweise 85 bis 60 Gew.-% Oxidmatrix vorliegt.

3. Verfahren gemäß einem der Ansprüche 1 bis 2, dadurch gekennzeichnet, daß die Oxidmatrix ausgewählt ist aus einem oder mehreren der Oxide aus der Gruppe $SiO_2$ oder der Oxide der Metalle Aluminium, Magnesium, Calcium, Titan, Zirkonium.

4. Verfahren gemäß Anspruch 3, dadurch gekennzeichnet, daß die Oxidmatrix eine binäre oder ternäre Matrix aus $SiO_2$ und mindestens einem Oxid der Metalle Aluminium, Magnesium, Calcium, Titan, Zirkonium ist.

5. Verfahren gemäß Anspruch 4, dadurch gekennzeichnet, daß die Oxidmatrix aus 75 bis 100, vorzugsweise 90 bis 100 Gew.-% $SiO_2$ und 0 bis 25, vorzugsweise 0 bis 10 Gew.-% Metalloxid besteht.

6. Verfahren gemäß Anspruch 1, dadurch gekennzeichnet, daß als Phase mit Wasserstoffbindungsvermögen eine Chalkogenverbindung, insbesondere eine Sauerstoffverbindung enthalten ist.

7. Verfahren gemäß Anspruch 1, dadurch gekennzeichnet, daß als Phase mit Wasserstoffbindungsvermögen eine metallische Phase enthalten ist.

8. Verfahren gemäß einem der Ansprüche 1 oder 6 bis 7, dadurch gekennzeichnet, daß die Phase mit Wasserstoffbindungsvermögen 0,05 bis 15 Gew.-% vorzugsweise 0,1 bis 5 Gew.-%, bezogen auf Gesamtkatalysatormasse, beträgt.

9. Verfahren gemäß einem der vorhergehenden Ansprüche, dadurch gekennzeichnet, daß als Wasserstoff-Donator Wasserstoff. Ammoniak oder ein niedriger Kohlenwasserstoff, vorzugsweise Ammoniak, eingesetzt wird.

10. Verfahren gemäß einem der vorhergehenden Ansprüche, dadurch gekennzeichnet, daß es bei Temperaturen im Bereich von 150 bis 350 °C, insbesondere 150 bis 280 °C, durchgeführt wird.

11. Katalysator, insbesondere zur selektiven $NO_x$-Reduktionin Abgasen, bestehend aus
   a) 10 bis 95 Gew.-% eines zu 40 bis 90 Mol-% mit Lithium- und/oder SE-Ionen ausgetauschten Zeolith Y
   b) 4,95 bis 89.95 Gew.-% amorpher Oxidmatrix aus der Gruppe $SiO_2$ oder der Oxide der Metalle Aluminium, Magnesium, Calcium, Titan, Zirkonium, oder deren binären oder ternären Gemischen
   c) 0.05 bis 15 Gew.-% einer Phase mit Wasserstoffbindungsvermögen aus einem oder mehreren Metallen aus der Gruppe der Metalle mit den Ordnungszahlen 22 bis 28, vorzugsweise 26 bis 28, oder Verbindungen dieser Metalle.
   wobei die Summe der Komponenten a) bis c) sich jeweils auf 100 Gew.-% ergänzt.

## Claims

1. A process for the catalytic reduction of nitrogen oxides ($NO_x$) in exhaust gases, in particular flue gases, by treating the exhaust gases with a catalyst on a zeolite basis with the addition of a hydrogen donor, characterised in that a catalyst is used which consists of a zeolite Y dispersed in an amorphous matrix of oxide, in which zeolite 40 to 90 mole percent of the exchangeable ions are replaced by lithium and/or rare earth metal ions (RE ions), and that the catalyst additionally contains a phase with hydrogen-bonding power consisting of one or more metals of the group of metals having the atomic numbers 22 to 28, preferably 26 to 28, or compounds of these metals.

**2.** A process according to Claim 1, characterised in that a catalyst is used in which there is a mixture of at least 10% by weight, preferably 15 to 40% by weight, zeolite Y and at most 90% by weight, preferably 85 to 60% by weight, oxide matrix.

**3.** A process according to one of Claims 1 or 2, characterised in that the oxide matrix is selected from one or more of the oxides from the group $SiO_2$ or the oxides of the metals aluminium, magnesium, calcium, titanium and zirconium.

**4.** A process according to Claim 3, characterised in that the oxide matrix is a binary or ternary matrix of $SiO_2$ and at least one oxide of the metals aluminium, magnesium, calcium, titanium and zirconium.

**5.** A process according to Claim 4, characterised in that the oxide matrix consists of 75 to 100, preferably 90 to 100, % by weight $SiO_2$ and 0 to 25, preferably 0 to 10, % by weight metal oxide.

**6.** A process according to Claim 1, characterised in that a chalcogen compound, in particular an oxygen compound, is contained as the phase having hydrogen-bonding power.

**7.** A process according to Claim 1, characterised in that a metallic phase is contained as the phase having hydrogen-bonding power.

**8.** A process according to one of Claims 1 or 6 to 7, characterised in that the phase having hydrogen-bonding power is 0.05 to 15% by weight, preferably 0.1 to 5% by weight, relative to the total catalyst weight.

**9.** A process according to one of the preceding Claims, characterised in that hydrogen, ammonia or a lower hydrocarbon, preferably ammonia, is used as the hydrogen donor.

**10.** A process according to one of the preceding Claims, characterised in that it is carried out at temperatures in the range of 150 to 350°C, in particular 150 to 280°C.

**11.** A catalyst, in particular for the selective reduction of $NO_x$ in exhaust gases, consisting of
    a) 10 to 95% by weight of a zeolite Y, 40 to 90 mole percent of which is replaced by lithium and/or RE ions
    b) 4.95 to 89.95% by weight amorphous oxide matrix from the group $SiO_2$ or the oxides of the metals aluminium, magnesium, calcium, titanium, zirconium, or the binary or ternary mixtures thereof
    c) 0.05 to 15% by weight of a phase having hydrogen-bonding power consisting of one or more metals of the group of metals having the atomic numbers 22 to 28, preferably 26 to 28, or compounds of these metals,
the total of the constituents a) to c) being 100% by weight each time.

**Revendications**

**1.** Procédé de réduction catalytique d'oxydes de l'azote ($NO_x$) dans des gaz effluents, en particulier dans des fumées, par traitement des gaz effluents à l'aide d'un catalyseur à base de zéolite avec addition d'un donneur d'hydrogène, caractérisé en ce qu'on utilise un catalyseur formé de zéolite Y dispersée dans une matrice amorphe d'oxyde et dans laquelle 40 à 90 moles % des ions échangeables sont remplacés par des ions de lithium et/ou de métaux des terres rares (ions "TR"), et en ce que le catalyseur contient en outre une phase dotée d'un pouvoir de fixation d'hydrogène et formée d'un ou plusieurs métaux du groupe des métaux ayant des numéros d'ordre de 22 à 28, avantageusement de 26 à 28, ou de composés de ces métaux.

**2.** Procédé selon la revendication 1, caractérisé en ce qu'on utilise un catalyseur comportant un mélange d'au moins 10 % en poids, avantageusement 15 à 40 % en poids de zéolite Y et 90 % au maximum, avantageusement 85 à 60 % en poids de la matrice d'oxyde(s).

**3.** Procédé selon l'une des revendication 1 à 2, caractérisé en ce que la matrice d'oxyde(s) est choisie parmi un ou plusieurs oxydes de l'ensemble formé par $SiO_2$ ou les oxydes des métaux aluminium, magnésium, calcium, titane, zirconium.

4. Procédé selon la revendication 3, caractérisé en ce que la matrice d'oxyde(s) est une matrice binaire ou ternaire formée de $SiO_2$ et d'au moins un oxyde des métaux aluminium, magnésium, calcium, titane, zirconium.

5. Procédé selon la revendication 4, caractérisé en ce que la matrice d'oxyde(s) consiste en 75 à 100, avantageusement 90 à 100 % en poids de $SiO_2$ et 0 à 25, avantageusement, avantageusement 0 à 10 % en poids d'oxyde de métal.

6. Procédé selon la revendication 1, caractérisé en ce que, comme phase dotée d'un pouvoir de fixation d'hydrogène, est contenu un composé de chalcogène, en particulier un composé de l'oxygène.

7. Procédé selon la revendication 1, caractérisé en ce que, comme phase dotée d'un pouvoir de fixation d'hydrogène est contenue une phase métallique.

8. Procédé selon l'une des revendications 1 ou 6 à 7, caractérisé en ce que la phase dotée d'un pouvoir de fixation d'hydrogène représente 0,05 à 15 % en poids, avantageusement 0,1 à 5 % en poids, par rapport à la masse totale du catalyseur.

9. Procédé selon l'une des revendications précédentes, caractérisé en ce qu'on utilise comme donneur d'hydrogène l'hydrogène, l'ammoniac, ou un hydrocarbure inférieur, avantageusement l'ammoniac.

10. Procédé selon l'une des revendications précédentes, caractérisé en ce qu'il est mis en oeuvre à des températures se situant entre 150 et 350°C, notamment 150 à 280°C.

11. Catalyseur, notamment pour la réduction sélective de $NO_x$ dans des gaz effluents, ce catalyseur consistant en :
   a) 10 à 95 % en poids d'une zéolite Y dont 40 à 90 moles % ont été remplacés par du lithium et/ou des ions des terres rares,
   b) 4,95 à 89,95 % en poids d'une matrice amorphe formée d'oxyde(s) du groupe constitué par $SiO_2$ ou les oxydes des métaux aluminium, magnésium, calcium, titane, zirconium ou leurs mélanges binaires ou ternaires,
   c) 0,05 à 15 % en poids d'une phase dotée d'un pouvoir de fixation d'hydrogène, formée d'un ou plusieurs métaux du groupe des métaux ayant les numéros d'ordre de 22 à 28, avantageusement 26 à 28 ou des composés de ces métaux,
   la somme des composants (a) à (c) formant toujours 100 %.